## Europäisches Patentamt

## European Patent Office

## Office européen des brevets

(11) Veröffentlichungsnummer: **0 262 362 B1**

(12) # EUROPÄISCHE PATENTSCHRIFT

(45) Veröffentlichungstag der Patentschrift: **11.03.92**

(21) Anmeldenummer: **87111866.7**

(22) Anmeldetag: **17.08.87**

(51) Int. Cl.⁵: **H04N 9/82**, H04N 9/88, H04N 9/81

(54) **Verfahren zur Aufzeichnung und Wiedergabe des in einem Fernsehsignal übertragenen Datenpakets.**

(30) Priorität: **30.08.86 DE 3629657**

(43) Veröffentlichungstag der Anmeldung:
**06.04.88 Patentblatt 88/14**

(45) Bekanntmachung des Hinweises auf die
Patenterteilung:
**11.03.92 Patentblatt 92/11**

(84) Benannte Vertragsstaaten:
**AT DE FR GB IT**

(56) Entgegenhaltungen:
**EP-A- 0 243 739**
**WO-A-84/02442**
**DE-A- 3 330 979**
**DE-C- 3 227 373**

(73) Patentinhaber: **GRUNDIG E.M.V. Elektro-**
**Mechanische Versuchsanstalt Max Grundig**
**holländ. Stiftung & Co. KG.**
**Kurgartenstrasse 37**
**W-8510 Fürth/Bay.(DE)**

(72) Erfinder: **Opelt, Christian**
**Grundig E.M.V. Kurgartenstrasse 37**
**W-8510 Fürth(DE)**

**Beschreibung**

Die Erfindung betrifft ein Verfahren zur Aufzeichnung des in einem Fernsehsignal im Zeitmultiplex mit der Bildinformation übertragenen Datenpakets.

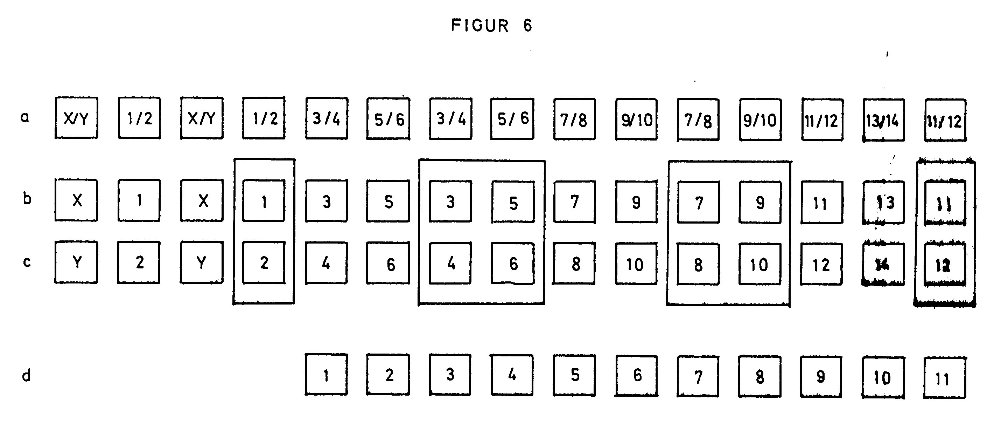

In der nicht vorveröffentlichten Patentanmeldung P 36 13 798.7 vom 24.04.86 (EP-A-0 243 739) ist ein Verfahren zur Aufzeichnung von Satelliten-Fernsehsignalen beschrieben. Bei diesem Verfahren wird das Eingangssignal unter Verwendung eines Speichers derart verarbeitet, daß zwei Arten von zeitlichen Lücken entstehen, deren erste zeilenfrequent und deren zweite halbbildfrequent auftreten. Hierzu werden aufeinanderfolgende Zeilen des Satelliten-Fernsehsignals zyklisch n Speichereinheiten des Speichers zur Zeitexpansion zugeführt. Das zeitexpandierte Signal wird auf k Kanäle verteilt. In die zeilenfrequenten Lücken werden Synchronimpulse eingesetzt. Die zeitexpandierten Signale werden nach dem Schrägspurverfahren auf k parallele Spuren eines Magnetbandes aufgezeichnet, wobei während der halbbildfrequenten Lücken die Kopfumschaltung stattfindet. Die Zuteilung des zeitexpandierten Signals auf die k Kanäle erfolgt derart, daß jeder Kanal abwechselnd U- und V-Komponenten des Farbartsignals des Satelliten-Fernsehsignals enthält. Sorgt man nun dafür, daß die den einzelnen Kanälen zugeordneten Auslesevorgänge gleichzeitig beginnen und enden, dann ist bei der Wiedergabe eine Dropout-Kompensation möglich, wie sie im Zusammenhang mit Figur 6 der Patentanmeldung P 36 13 798.7 näher erläutert wird. Dabei wird die infolge eines Dropouts gestörte Information durch eine Information aus dem anderen Kanal ersetzt. Dadurch kann auch im Dropout-Fall ein Farbbild mit halber vertikaler Auflösung erhalten werden.

Weiterhin ist es beispielsweise aus der DE-PS 32 27 373 bereits bekannt, aus binären Signalelementen bestehende Wörter zu Mehr-Bit-Abtastwerten zusammenzufassen und nach einer Digital/Analog-Wandlung als quantisierend gestufte Signale mittels eines Videorecorders aufzuzeichnen.

Die Aufgabe der Erfindung besteht darin, ein Verfahren zur Aufzeichnung des in einem Fernsehsignal im Zeitmultiplex mit der Bildinformation übertragenen Datenpakets anzugeben, welches eine wiedergabeseitige Dropout-Kompensation ermöglicht.

Diese Aufgabe wird durch die im kennzeichnenden Teil des Anspruchs 1 angegebenen Merkmale gelöst. Vorteilhafte Ausgestaltungen ergeben sich aus den Ansprüchen 2 und 3. Die Ansprüche 4 und 5 beschreiben ein Verfahren zur Wiedergabe eines nach einem der Ansprüche 1 bis 3 aufgezeichneten Datenpakets.

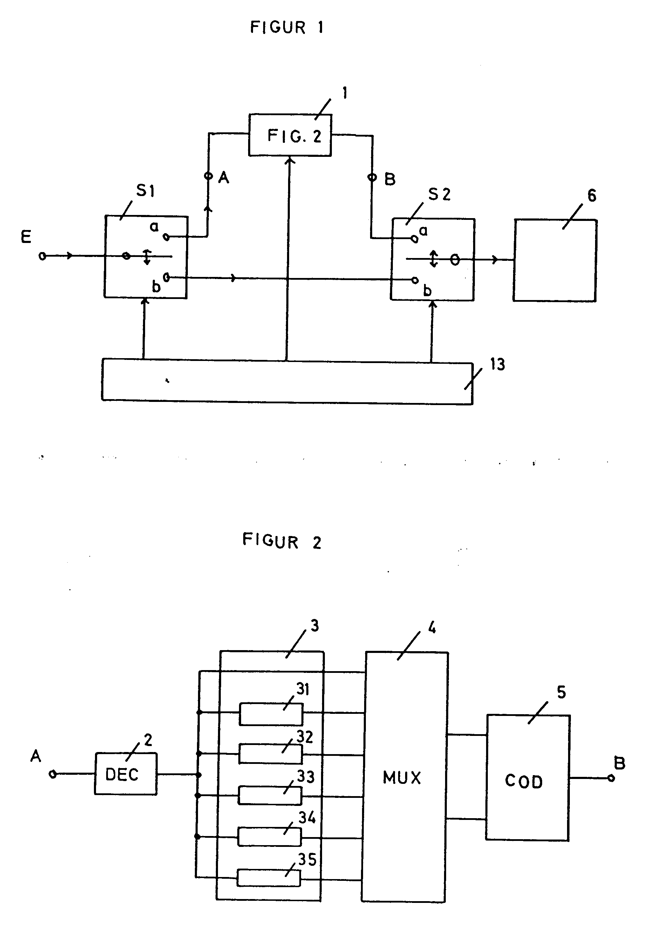

Die Vorteile der Erfindung liegen darin, daß bei einem mittels des beanspruchten Verfahrens aufgezeichneten Datenpaket eine Dropoutkompensation erfolgen kann. Dies wird im wesentlichen dadurch erreicht, daß zur Aufzeichnung des Datenpakets zunächst eine zeitverzögerte Wiederholung der Dateninformation und eine anschließende Mehrpegelcodierung durchgeführt wird. Dadurch wird u. a. erreicht, daß trotz der eingeführten Redundanz keine zusätzliche Bandbreite zur Aufzeichnung zur Verfügung gestellt werden muß. Die erhaltenen Mehrpegelinformationen werden derart verarbeitet, daß die einer Zeile zugehörigen, mehrfach vorliegenden Informationen zueinander zeitversetzt auf verschiedenen Kanälen bzw. Schrägspuren eines Aufzeichnungsträgers aufgezeichnet werden. Bei der Wiedergabe eines derartig aufgezeichneten Datenpakets kann im Falle eines Dropouts die jeweils in der anderen Spur aufgezeichnete Information anstelle der gestörten Information ausgewertet werden. Weitere vorteilhafte Eigenschaften ergeben sich aus einem Ausführungsbeispiel, welches im folgenden anhand der Figuren 1 bis 6 näher erläutert wird.

Es zeigen:

Fig. 1     eine Schaltung zur Erläuterung der Aufzeichnung,

Fig. 2     eine Schaltung zur Erläuterung der Funktionsweise des Schaltungsblocks 1 von Fig. 1,

Fig. 3     ein Diagramm zur Veranschaulichung der Signale an verschiedenen Schaltungspunkten von Fig. 1 bzw. 2,

Fig. 4     eine Schaltung zur Erläuterung der Wiedergabe,

Fig. 5     eine Schaltung zur Erläuterung der Funktionsweise des Schaltungsblocks 8 von Fig. 4, und

Fig. 6     ein Diagramm zur Veranschaulichung der Signale an verschiedenen Schaltungspunkten von Fig. 4 bzw. 5.

Die Eingang E der in Figur 1 gezeigten Schaltung wird ein Satelliten-Fernsehsignal zugeführt, bei dem die in jeder Zeile enthaltenen drei Informationsblöcke, d. h. das duobinär codierte Datenpaket (bestehend aus Daten-, Ton- und Synchronsignalen), die Chrominanz- und die Luminanzinformation, zeitlich nacheinander übertragen werden. Für die Übertragung des Datenpakets werden pro Zeile 105 bit verwendet.

Das Satelliten-Fernsehsignal gelangt an den feststehenden Kontakt eines Schalters S 1, welcher von einer Steuerschaltung 13 gesteuert wird. Während des Zeitintervalls jeder Zeile, in dem das duobinär codierte Datenpaket übertragen wird, ist der bewegliche Arm des Schalters S 1 mit dem Kontakt a verbunden, so daß das Datenpaket über den Schaltungspunkt A an einen Schaltungsblock 1 weitergeleitet wird, welcher ebenfalls von der Steuerschaltung 13 gesteuert und dessen Funktionsweise im folgenden anhand von Figur 2 näher erläutert wird.

Das duobinär codierte Datenpaket wird in einem Duobinärdecoder 2 in ein binäres Signal umgewandelt, beispielsweise ein NRZ-Signal. Dieses wird einem Speicher 3 zugeführt, der im gezeigten Ausführungsbeispiel aus einem direkten Weg und 5 RAM's (31, ..., 35) besteht. Diese RAM's, die ebenfalls von der Steuerschaltung 13 gesteuert werden, haben die Aufgabe, die aufeinanderfolgenden Zeilen des in binäre Form umgewandelten Datenpakets unterschiedlich zu verzögern und die jeder Zeile zugeordnete Dateninformation zweimal am Ausgang des Speichers zur Verfügung zu stellen, und zwar zu unterschiedlichen Zeiten. Dadurch werden redundante Daten geschaffen, welche zur wiedergabeseitigen Dropoutkompensation verwendet werden können, wie unten noch erläutert wird.

Die Ausgangssignale des Speichers 3 werden einem von der Steuerschaltung 13 gesteuerten Multiplexer 4 zugeführt, welcher die Ausgangssignale des Speichers in einem vorgegebenen Rhythmus an seine Ausgänge 4a und 4b weitergibt. Beispielsweise können am Ausgang 4a die aus allen ungeradzahligen Zeilen und am Ausgang 4b die aus allen geradzahligen Zeilen abgeleiteten Dateninformationen gleichzeitig anliegen. Diese werden gleichzeitig einem Quarternärcoder 5 zugeleitet, in welchem aus den binären Informationen ein quarternäres Signal gebildet wird, welches am Ausgang B der in Fig. 2 bzw. am Punkt B der in Figur 1 gezeigten Schaltung zur Verfügung steht.

Vom Punkt B der in Figur 1 gezeigten Schaltung gelangt das quarternär codierte Datenpaket über einen von der Steuerschaltung 13 gesteuerten Schalter S 2, der sich in der Schaltstellung a befindet, an eine Schaltung 6.

Während des Zeitintervalles jeder Zeile, in dem die Chrominanz- und die Luminanzinformation übertragen wird, befinden sich die Schalter S 1 und S 2 jeweils in der Schaltstellung b, so daß Chrominanz- und Luminanzinformation unverändert der Schaltung 6 zugeführt werden.

Folglich liegen an der Schaltung 6 in jeder Zeile des Satelliten-Fernsehsignals nacheinander ein quarternär codiertes Datenpaket, eine Chrominanz- und eine Luminanzinformation an.

Die Schaltung 6 kann beispielsweise eine Schaltung sein, wie sie in Figur 1 der nicht vorveröffentlichten Patentanmeldung P 36 13 798 gezeigt ist. Diese Schaltung bewirkt im vorliegenden Fall, daß das quarternär codierte Datenpaket zeitlich gedehnt, auf zwei Kanäle verteilt und auf zwei Schrägspuren eines Magnetbandes aufgezeichnet wird. Einzelheiten zur Funktionsweise dieser Schaltung können der vorgenannten Patentanmeldung entnommen werden.

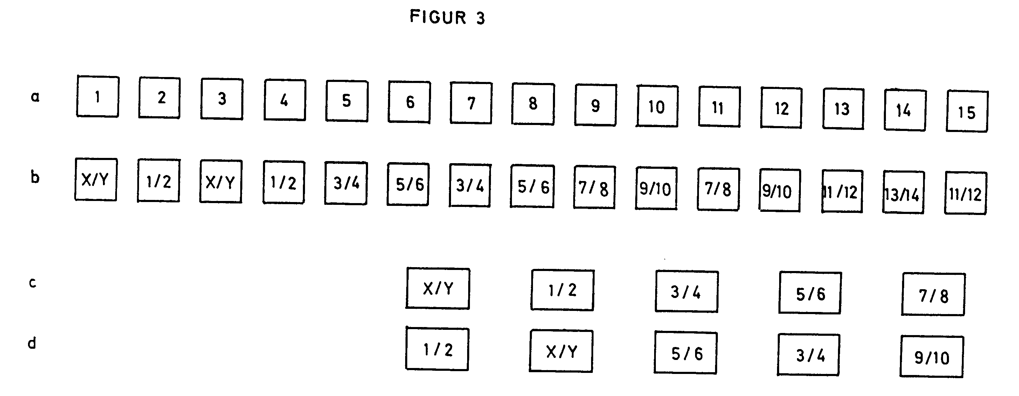

Die Figur 3 zeigt ein Diagramm zur Veranschaulichung der Signale an verschiedenen Schaltungspunkten der Figuren 1 und 2. Die Figur 3a zeigt die aus dem Satelliten-Fernsehsignal abgetrennten duobinär codierten Datenpakete der aufeinanderfolgenden Zeilen, wie sie am Schaltungspunkt A der Figuren 1 und 2 anliegen. In den Zwischenräumen zwischen den Datenpaketen der einzelnen Zeilen werden die zugehörigen Chrominanz- und Luminanzinformationen übertragen. Die Figur 3b zeigt die quarternär codierten Datenpakete, wie sie am Schaltungspunkt B der Figuren 1 und 2 auftreten. Die mit X/Y bezeichneten Datenpakete beinhalten Dateninformationen, die mit dem vorherigen Bild übertragen wurden. Eine vergleichende Betrachtung der Figuren 3a und 3b zeigt anschaulich die Wirkung der Schaltung gemäß Figur 2, insbesondere des Speichers 3 und des Quarternärcoders 5. Die Figuren 3c und 3d zeigen, wie die quarternär codierten Datenpakete durch die Schaltung 6 verarbeitet werden. Insbesondere ist auch ersichtlich, daß die Datenpakete jeweils doppelt vorliegen und zeitversetzt auf verschiedenen Kanälen bzw. Schrägspuren des Magnetbandes aufgezeichnet werden.

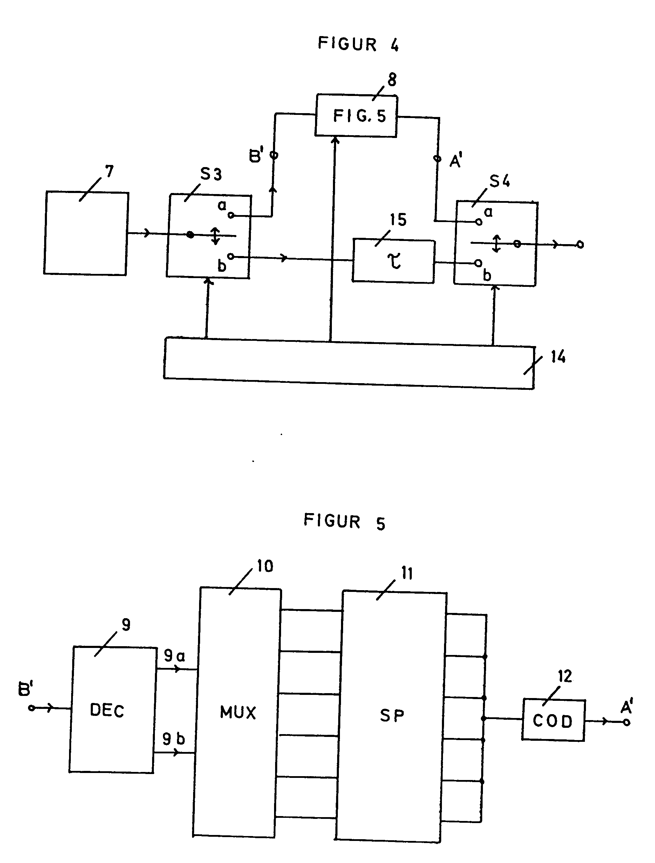

Im folgenden wird anhand der Figur 4 die wiedergabeseitige Signalverarbeitung beispielhaft erläutert. Die von den Wiedergabeköpfen wiedergegebenen quarternär codierten Datenpakete werden zunächst in einer Schaltung 7 verarbeitet. Diese Schaltung kann beispielsweise eine Schaltung sein, wie sie in der Figur 4 der nicht vorveröffentlichten Patentanmeldung P 36 13 798 gezeigt ist. Diese Schaltung bewirkt im wesentlichen, daß die wiedergegebenen quarternär codierten Datenpakete zeitlich gestaucht und wieder zu einem einkanaligen Signal zusammengefaßt werden. Ferner enthält die Schaltung Dropoutdetektoren, welche die wiedergegebenen Signale in bekannter Weise auf Dropouts hin überwachen. Weiterhin ist in der Schaltung 7 ein Dropoutspeicher vorgesehen, der im vorliegenden Ausführungsbeispiel als Zweizeilenspeicher ausgebildet ist. Bei ungestörtem Signal wird der Inhalt des Dropoutspeichers ständig aktualisiert, während bei gestörtem Signal der Speicherinhalt an den Ausgang der Schaltung weitergegeben wird. Durch die oben beschriebene aufzeichnungsseitige Aufbereitung der Datenpakete wird erreicht, daß eine derartige Dropoutkompensation auch für die Datenpakete erfolgen kann. Einzelheiten zur genauen Funktionsweise der Schaltung 7 können der Patentanmeldung P 36 13 798 entnommen werden.

Das Ausgangssignal der Schaltung 7 gelangt an den feststehenden Kontakt eines Schalters S 3, welcher von einer Steuerschaltung 14 gesteuert wird. Während des Zeitintervalls jeder Zeile, in

dem das quaternär codierte Datenpaket am Ausgang der Schaltung 7 anliegt, befindet sich der Schalter S 3 in der Schaltstellung a, so daß das Datenpaket über den Schaltungspunkt B' an einen Schaltungsblock 8 weitergeleitet wird, welcher ebenfalls von der Steuerschaltung 14 gesteuert und dessen Funktionsweise im folgenden anhand von Figur 5 näher erläutert wird.

Das quaternär codierte Datenpaket wird in einem Quaternärdecoder 9 in zwei binäre Signale umgewandelt, Welche gleichzeitig an den Ausgängen 9a und 9b des Quaternärdecoders anliegen. Beispielsweise können am Ausgang 9a die aus allen ungeradzahligen Zeilen und am Ausgang 9b die aus allen geradzahligen Zeilen abgeleiteten Dateninformationen abgegriffen werden. Die binären Signale werden einem von der Steuerschaltung 14 gesteuerten Multiplexer 10 zugeführt, welcher die binären Signale in einem vorgegebenen Rhythmus an seine Ausgangsleitungen anlegt. Die Ausgangsleitungen des Multiplexers 10 sind mit einem aus einzelnen Speichereinheiten (RAM's) bestehenden Speicher 11 verbunden, welcher ebenfalls von der Steuerschaltung 14 gesteuert wird. Dieser Speicher 11 kann ebenso aufgebaut sein wie der im Zusammenhang mit der Aufzeichnung beschriebene Speicher 3 (siehe Figur 2).

Es ist aber ebenso denkbar, einen Speicher mit geringerer Speicherkapazität zu verwenden, da die Aufgabe des Speichers 11 lediglich darin besteht, die Ausgangssignale des Multiplexers 10 zu ordnen und in zeitlich richtiger Reihenfolge an die nachfolgenden Schaltungsteile weiterzugeben, während mittels des aufzeichnungsseitigen Speichers 3 u. a. Redundanz geschaffen werden mußte.

Das Ausgangssignal des Speichers 11 gelangt an einen Duobinärcoder 12, welcher das binäre Signal in ein duobinäres Signal, welches dann am Ausgang A' der in Figur 5 bzw. am Schaltungspunkt A' der in Figur 4 gezeigten Schaltung anliegt.

Dieses duobinäre Signal wird über den Schalter S 4, welcher mit demselben Steuersignal beaufschlagt wird wie der Schalter S 3 und welcher sich in der Schaltstellung a befindet, an den Ausgang der in Figur 4 gezeigten Schaltung weitergegeben.

Während des Zeitintervalles jeder Zeile, in dem die Chrominanz- und die Luminanzinformation übertragen wird, befinden sich die Schalter S 3 und S 4 jeweils in der Schaltstellung b, so daß Luminanz- und Chrominanzinformation an den Ausgang der in Figur 4 gezeigten Schaltung gelangt.

Die Luminanz- und Chrominanzinformation wird auf dem Weg zwischen den Schaltern S 3 und S 4 in einem Verzögerungsglied 15 verzögert, um diejenigen Verzögerungen zu kompensieren, welchen das Datenpaket während seiner aufzeichnungs- und wiedergabeseitigen Aufbereitung unterworfen war. Diese Verzögerung liegt in der Größenordnung mehrerer Zeilendauern.

Die Figur 6 zeigt ein Diagramm zur Veranschaulichung der Signale an verschiedenen Schaltungspunkten der Figuren 4 und 5. Die Figur 6a zeigt die quaternär codierten Datenpakete, wie sie am Schaltungspunkt B' der Figuren 4 und 5 auftreten. Die mit X/Y bezeichneten Datenpakete beinhalten auch hier Dateninformationen, die mit dem vorherigen Bild übertragen wurden. Die Figuren 6b und 6c zeigen die an den Ausgängen 9a und 9b des Quaternärdecoders 9 anliegenden binären Signale. Es ist ersichtlich, daß die jeder Zeile zugeordnete Dateninformation insgesamt zweimal vorliegt. Zur Wiedergewinnung des Ausgangssignals werden im vorliegenden Ausführungsbeispiel lediglich die in den Figuren 6b und 6c eingerahmten binären Informationen verwendet. Diese werden mit Hilfe des Speichers 11 (siehe Figur 5) in die richtige Reihenfolge gebracht und im Duobinärcoder 12 (siehe Figur 5) in duobinäre Signale umgewandelt, welche dann - wie es in Figur 6d gezeigt ist - am Ausgang der Schaltung zur Verfügung stehen.

**Patentansprüche**

1. Verfahren zur Aufzeichnung des in einem Fernsehsignal im Zeitmultiplex mit der Bildinformation übertragenen Datenpakets, dadurch gekennzeichnet, daß

   - das Datenpaket einer jeden Zeile mittels eines Zeittores aus dem Fernsehsignal abgetrennt wird,
   - zu jedem Datenpaket zusätzlich eine zeitverzögerte Version gebildet wird,
   - sämtliche Datenpakete einer Mehrpegelcodierung unterworfen werden,
   - und die einer Zeile zugehörigen, mehrfach vorliegenden Informationen zueinander zeitversetzt auf verschiedenen Schrägspuren eines Aufzeichnungsträgers augezeichnet werden.

2. Verfahren nach Anspruch 1, dadurch gekennzeichnet, daß das Fernsehsignal ein Satelliten-Fernsehsignal ist und das aus dem Satelliten-Fernsehsignal abgetrennte duobinär codierte Datenpaket in ein binäres Signal umgewandelt wird und die aufeinanderfolgenden Zeilen des binären Signals zur Erzeugung der zusätzlichen zeitverzögerten Version unterschiedlichen Verzögerungen unterworfen und in ein quaternär codiertes Signal umgewandelt werden.

3. Verfahren nach Anspruch 2, dadurch gekennzeichnet, daß das quaternär codierte Signal wieder in das analoge Satelliten-Fernsehsignal eingefügt wird.

**4.** Verfahren zur Wiedergabe eines nach einem der Ansprüche 1 bis 3 aufgezeichneten Datenpakets, dadurch gekennzeichnet, daß
- das Datenpaket mittels eines Zeittores aus dem wiedergegebenen Fernsehsignal abgetrennt wird,
- die im abgetrennten Datenpaket enthaltenen, in Mehrpegelcodierung vorliegenden Informationen in die ursprüngliche Form rückumgewandelt werden,
- und diese in das verzögerte, analoge Fernsehsignal eingefügt werden.

**5.** Verfahren nach Anspruch 4, dadurch gekennzeichnet, daß das wiedergegebene Fernsehsignal ein Satelliten-Fernsehsignal ist, das wiedergegebene Datenpaket ein quarternär codiertes Datenpaket ist und daß dieses Datenpaket in ein binäres Signal umgewandelt, einzelne Zeilen des binären Signals unterschiedlichen Verzögerungen unterworfen und in ein duobinär codiertes Signal umgewandelt werden.

## Claims

**1.** Method for recording the data packet transmitted in time-division multiplex with the video information in a television signal, characterised in that
- the data packet of each line is separated from the television signal by means of a time gate,
- a time-delayed version of each data packet is additionally formed,
- all data packets are subjected to multi-level coding,
- and the information items belonging to one line and present several times are recorded mutually offset in time on different helical tracks of a recording medium.

**2.** Method according to Claim 1, characterised in that the television signal is a satellite television signal and the duobinary-coded data packet separated from the satellite television signal is converted into a binary signal and the successive lines of the binary signal are subjected to different delays for generating the additional time-delayed version and are converted into a quaternary-coded signal.

**3.** Method according to Claim 2, characterised in that the quaternary-coded signal is again inserted into the analog satellite television signal.

**4.** Method for reproducing a data packet recorded in accordance with one of Claims 1 to 3, characterised in that
- the data packet is separated from the reproduced television signal by means of a time gate,
- the information items contained in the separated data packet and present in multi-level coding are reconverted into their original form,
- and these are inserted into the delayed analog television signal.

**5.** Method according to Claim 4, characterised in that the reproduced television signal is a satellite television signal, the reproduced data packet is a quaternary-coded data packet and in that this data packet is converted into a binary signal, individual lines of the binary signal are subjected to different delays and are converted into a duobinary-coded signal.

## Revendications

**1.** Procédé d'enregistrement du paquet de données transmis avec l'information d'image en multiplexage temporel dans un signal de télévision, caractérisé en ce que :
- le paquet de données de chaque ligne est séparé du signal de télévision au moyen d'une porte de commutation temporelle;
- pour chaque paquet de données, on forme de manière supplémentaire une version retardée dans le temps;
- l'ensemble des paquets de données est soumis à un codage multiniveau ; et
- les informations appartenant à une ligne et se trouvant en plusieurs exemplaires sont enregistrées sur différentes pistes inclinées d'un support d'enregistrement avec un décalage temporel des unes par rapport aux autres.

**2.** Procédé selon la revendication 1, caractérisé en ce que le signal de télévision est un signal de télévision de satellite et le paquet de données séparé du signal de télévision de satellite et codé en duobinaire est transformé en un signal binaire et les lignes successives du signal binaire sont soumises à différentes temporisations et transformées en un signal codé en quaternaire pour produire la version supplémentaire retardée dans le temps.

**3.** Procédé selon la revendication 2, caractérisé en ce que le signal codé en quaternaire est introduit de nouveau dans le signal analogique de télévision de satellite.

**4.** Procédé pour la reproduction d'un paquet de données enregistré conformément à l'une des revendications 1 à 3, caractérisé en ce que :

- le paquet de données est séparé du signal de télévision reproduit au moyen d'une porte de communication temporelle ;
- les informations contenues dans le paquet de données séparé et se trouvant en codage multiniveau sont retransformées sous leur forme originale;
- et celle-ci sont introduites dans le signal analogique de télévision retardé.

**5.** Procédé selon la revendication 4, caractérisé en ce que le signal de télévision reproduit est un signal de télévision de satellite, le paquet de données reproduit est un paquet de données codé en quaternaire et en ce que ce paquet de données est transformé en un signal binaire, des lignes individuelles du signal binaire sont soumises à différentes temporisations et transformées en un signal codé en duobinaire.

## FIGUR 1

## FIGUR 2

FIGUR 3

EP 0 262 362 B1

FIGUR 4

FIGUR 5

FIGUR 6

EP 0 262 362 B1